# EUROPEAN PATENT SPECIFICATION

(11) **EP 1 910 011 B1**
(45) Date of publication and mention of the grant of the patent: **26.05.2010**
(21) Application number: 06762406.4
(22) Date of filing: 28.06.2006
(51) Int. Cl.: B23K 20/02

(54) **METHOD FOR BONDING WORK PIECES AND MICRO-STRUCTURED COMPONENT**
VERFAHREN ZUR VERBINDUNG VON WERKSTÜCKEN UND MIKROSTRUKTURIERTES BAUTEIL
PROCEDE DE LIAISON DE PIECES ET D'UN COMPOSANT MICROSTRUCTURE

(30) Priority: 07.07.2005 DE 102005032115
(43) Date of publication of application: 16.04.2008
(73) Proprietor: ATOTECH Deutschland GmbH, 10553 Berlin (DE)
(72) Inventor: MEYER, Heinrich, 14109 Berlin (DE); KURTZ, Olaf, 10627 Berlin (DE); HERBER, Ralph, 12305 Berlin (DE); MADRY, Christian, 13053 Berlin (DE); ETZKORN, Johannes, 13581 Berlin (DE); VAGO, Thomas, 12309 Berlin (DE)
(74) Representative: Patentanwälte Bressel und Partner
(86) International application number: PCT/EP2006/006534
(87) International publication number: WO 2007/006461

(56) References cited:
- DE-C1- 19 801 374
- US-A- 5 964 398
- US-A- 6 071 389
- US-A- 2003 189 087
- US-A- 2004 232 211

## Description

The present invention relates to a method for bonding work pieces, more specifically for bonding micro-structured component layers that are suited for manufacturing micro-structured components, *i*.*e*., components with fluid conducting structures, such as micro-reactors, micro-mixers and micro-heat exchangers and that are preferably made from metals, more specifically from nickel, nickel alloys and/or steels, above all stainless steels. The invention relates further to a micro-structured component comprising a stack of micro-structured component layers that are connected together and are preferably made from metals and/or metal alloys, more specifically from nickel, nickel alloys and/or steels.

For manufacturing metallic micro-structured components, more specifically micro-reactors, micro-mixers and micro-heat exchangers, the thermal diffusion welding method has been used as a bonding technique for the metal foils to be bonded. The to-be-bonded stack of metal sheets consisting of discrete micro-structured component layers, more specifically foils, is thereby welded together in high vacuum under high pressure at high temperature through interdiffusion.

The major advantage of diffusion welding is that the components produced are monolithic *per se*. As used in the present invention, monolithic means that a bonding layer is no longer visible in cross section after the bonding method has been carried out, *i*.*e*., no bond seam can be made visible any longer. As a result, the region in which there was a bonding layer before the bonding method was carried out no longer or only hardly differs from the base material, thus exhibiting the same properties as the base material.

In order to achieve interdiffusion of the components to be bonded, high temperature, pressure and high vacuum are needed during diffusion welding in order to avoid oxide layers in the bonding region. Moreover, very high demands are placed on the surface finish of the components to be bonded, more specifically with regards to roughness, surface cleanliness as well as shape accuracy/planarity.

There are moreover limitations in the choice of the material since the minimum temperature of diffusion welding generally increases with the temperature stability of the base material. Furthermore, from approximately 1,000°C, equipment expense increases very fast as the bonding temperatures further increase. This not only applies to temperature generation itself and to the size of the plant (furnaces), but more specifically to the generation of a uniform compression pressure onto the component layers. If, because of the high temperatures, rams can no longer be used, clamping devices must be resorted to. For generating pressure, the clamping device relies on the principle of differing thermal expansion coefficients. While this method is still controllable when used on small components with an edge length of a few centimetres, the difficulties encountered when used on larger-size components soon become insuperable. The reason therefore is that it is not always possible to achieve the uniform distribution of compression pressure across the component, which is essential. This results in deformations of the small webs between the channels, distortion of the component and leaks.

Therefore, the needs of very high bonding temperatures are associated with a plurality of technical problems, the lack of suitable commercially available plants (high temperature compression tools), scrap and, in the end, unacceptable manufacturing costs.

While very small diffusion welded components are manufactured at very high cost and commercialized at accordingly high prices (of up to some thousands of Euro a piece) for laboratory needs (catalogue 2005 of the Institut für Mikrotechnik Mainz GmbH (IMM) [institute for Microtechnology in Mainz, Germany*]*) the use of high temperature diffusion welding for larger-size components is limited. Consequently, such products are not sold in spite of the existing need therefor.

The housing method generally following the method of bonding the component layers, by which the housing is bonded, inclusive of the connections, to the component body, typically by electron beam welding, is even more subjected to this restriction since material combinations within one component are difficult to achieve and leaks occasioned by very strong local heat build-up may appear at the diffusion weld seams of the component body.

These problems and the resulting cost of such products drastically limit the use of the method.

This limitation does not apply for materials, *i*.*e*., for steel types that may already be bonded at lower temperatures. Currently, very large-sized micro-structured heat exchangers are also manufactured on an industrial scale, exclusively by *HEATRIC*/UK. In summary, it is noted that the very high bonding temperatures presently needed are the main obstacle to the industrial production of micro-structured apparatus for chemical applications.

For these reasons, soldering/brazing methods have been proposed as an alternative for manufacturing micro-structured components. Soldering/brazing methods, however, always have the fundamental disadvantage that the solder used as a bonding layer between the to-be-bonded component layers is made from a material that is different from the one of the stacked layers. Soldering/brazing methods, however, offer some fundamental advantages with regards to production techniques and costs, above all a low bonding temperature that may be so much lower as to allow the use of industrially manufactured presses and also the possibility of joining together component layers having a reduced surface finish. Although soldering/brazing methods have already been repeatedly proposed as a bonding method for micro-structured components, it was not yet possible to utilize conventional soldering/brazing methods for industrially manufacturing such components because, as compared to diffusion welding, additional requirements must be met when manufacturing such type components: on the one side, during melting, solder is to be prevented from getting into the micro-structured channels in the component layers and from clogging the channels as a result thereof. On the other side, as contrasted with many soldering/brazing methods, it is imperative to work without fluxes since flux residues cannot, or can only at considerable expense, be removed from the finished component. Flux residues are not only undesired impurities in the reactor, but also the cause for corrosion. The solder seams at the narrow webs are thereby particularly critical.

Recent developments have made it possible to utilize soldering methods as a bonding technique for micro-structured components. A special soldering method for manufacturing chemical micro-reactors is indicated in DE 197 08 472 A1. In accordance therewith, solder layers can be formed by means of electroless or electrochemical methods. The solder layers mentioned therein are for example silver-containing solder, tin and tin/lead layers. It also proposes to apply a tin layer onto which in turn bismuth is deposited. Upon heating the thus coated and stacked layers, a low-melting eutectic mixture forms at the interface bismuth/tin. By diffusion of bismuth into the tin layer, the melting point of the alloy under formation increases so that, after tempering, a solder bond made in this manner remains constant well above the original soldering temperature.

The application of this principle of isothermal diffusion soldering for bonding micro-structured components is also described in detail by O.Kurtz, R.Herber, K.Crämer, H.Meyer and N.Kanani in Galvanotechnik, vol. 94 (1) (2003), pages 92-97.

In classical soldering, one distinguishes, depending on bonding temperature, soldering (T < 450°C), brazing (450°C < T < 1,100°C) and high temperature brazing (T > 950°C) as a special case of brazing. Different solders are utilized in the various temperature ranges. Their respective melting ranges are more or less significantly below the melting point of the base material to be bonded. Upon reaching the solder temperature, the solder starts to melt, wetting the surfaces of the areas to be joined, and effects a strong bond between the bonding partners once it has cooled down. Accordingly, the solder layer thus formed is always made from a material different from the one of the component layers.

The resulting different physical properties of the solder and of the base material, such as different thermal expansion coefficients, electrochemical potentials and the resulting corrosion behavior, different textures as well as different hardness and ductility are fundamental disadvantages, which, depending on the use and the field of application of the component, are more or less serious, *i*.*e*., acceptable.

A method suited for soldering micro-structured metal sheets has been described in DE 198 01 374 C1. This method proceeds as follows: producing a stack of metal sheets, with the brazing layers being respectively provided between two adjacent metal sheets and the coating thickness of the solder layers being 3 to 25 µm, and brazing the stack in vacuum or in an inert atmosphere by introducing heat. NiPₓ (nickel/phosphorus) alloys with a phosphorus fraction of 7 to 14 wt.-% are proposed as the brazing layer. The brazing layer may be deposited onto the metal sheets *inter alia* by galvanotechnics. The brazing temperature is in the range of from 720 to 1,280°C.

By nature, the fundamental problems partially arising from the material differences between the bonding layer and the base material when a soldering/brazing method is being used cannot occur with monolithically bonded components.

Such a structure can be produced if bonding occurs at a temperature that is high enough for the components of the bonding layer and of the base material to diffuse into each other and for the first formed concentration gradients of the elements present therein to disappear progressively (G.J.Humpston, D.M.Jacobson in: "*Principles of Soldering and Brazing*", ASM International, 4^{th} Printing, Materials Park, OH, April 2001, ISBN 0-87170-462-5, page 129). Therefore, monolithic components are generally only obtained using the already discussed, difficult, technically very complex and cost-intensive high temperature bonding methods, *i*.*e*., diffusion welding or diffusion bonding.

An additional disadvantage resides in that the base material often starts to recrystallize when subjected to such high temperatures; the grain coarsening associated therewith then adversely affects mechanical stability and other material properties.

In addition thereto, it is not possible to introduce catalysts for chemical reactions into the micro-structured channels prior to carrying out the bonding method if these do not resist the high bonding temperature.

Since catalysts generally are substances having a high specific surface area and are accordingly sensitive, the applicability of these methods is additionally limited.

Another diffusion bonding method for metals has been described by G.J.Humpston and D.M.Jacobson, *ibid*., page 129 *et seq.* This method is the transient liquid phase bonding method. This method is a diffusion fusion welding method by which one or two solder layers are produced between the two parts to be connected and the bond is heated to a temperature beyond the melting point of the solder material. In order to allow interdiffusion of the metals of the solder and of the base materials, the bond is heated over a quite long period of time. If two different solder metals or metal alloys are used, a eutectic of the two metals or alloys can also be formed. Copper, silver or gold are mentioned to be used as the solder material for most of the soldering processes. A typical example of a solder material for use in a diffusion fusion method is the alloy system copper/tin.

In "Joining Processes - Introduction to Brazing and Diffusion Bonding", Kluwer Academic Publishers, Dordrecht, 1998, pages 135-141, M.G.Nicholas describes the possibility of using foils and layers as the bonding material for what is referred to as diffusion bonding. Such type foils shall be typically 10 to 150 µm thick, whereas layers shall have a thickness ranging from 0.1 µm to several µm. As indicated in this document, these layers can be produced by vapor deposition or sputtering. The requirement mentioned for diffusion bonding is that the bonding material has a melting temperature above the bonding temperature and usually also substantially above operating temperature. Nickel and nickel alloys, which may be bonded at comparatively moderate temperatures, of 1,000°C for example, are mentioned as an exemplary material for such a bonding material. It mentions that the most advanced and most important examples of application to diffusion bonding consist of steels and nickel superalloys that may be bonded at a temperature of from 900 to 1,200°C, with nickel as the bonding layers. According to this document, nickel alloys with metal components have also been used as the bonding material. As contrasted therewith, B, P and C are not the preferred dissolved substances in nickel because they lessen ductility. In practice however, pure nickel is not used as the bonding material.

Referring to a soldering method, W.Müller and J.-U.Müller further mention in "Löttechnik", [soldering technology] DVS-Verlag, Düsseldorf, 1995, pages 169-170, that the brittleness of solders can be countered by subjecting the soldered parts to annealing. According to this document, this is above all a usual way of proceeding when phosphorus-free nickel base solders are being used. It says that during this tempering process, which follows directly the soldering process in the heat, the alloy elements silicon, boron and carbon, which are responsible for embrittlement, diffuse from the solder material into border regions of the base material. The disadvantage thereof is that, as a result of this treatment at high temperature during quite a long period of time the texture becomes coarse-grained. This could adversely affect the fatigue strength of the entire solder joint. With certain base materials, homogenizing is concurrently used for solution treatment. In order to avoid homogenizing and, as a result thereof, undesired grain growth, endeavours are made to produce, during the very soldering process already, a solder seam with as little hard phase as possible. This is said to be achieved through very small widths of joint clearance and longer soldering times. If a nickel base solder is used that contains phosphorus, the strength cannot be improved in a noteworthy manner by annealing. The diffusion coefficients of the combinations phosphorus/base material are said to be so small that the critical joint clearance is well below 10 µm. In practice however, this is hardly realizable. The soldering temperatures indicated in this document for certain nickel base solders are all in excess of 1,000°C.

The known bonding methods inclusive of the last mentioned brazing methods accordingly suffer from various disadvantages that will be briefly summarized:
- Conventional soldering methods cannot be used for manufacturing micro-structured components. Although the isothermal diffusion soldering methods are mainly suitable for practice and low in cost, they only cover applications in which the demands placed on corrosion and thermal stress are not too high.
- Because of the high expense involved, diffusion bonding is not suited either for application on high-temperature and corrosion-resistant high-alloy steels and nickel base alloys because of the very high process temperatures and it has moreover hereto before been limited to use on small components for laboratory applications.
- With brazing or diffusion soldering, the following problems arise: if one tries, in accordance with prior art, to lower the bonding temperature by providing one of the elements boron, phosphorus or silicon according to the respective phase diagram, no reliable stable joints can be obtained because of the formation of brittle phases. If such type bonding layers with a small coating thickness are applied onto the bonding areas, this involves extremely high expense according to M.G.Nicholas, *ibid*., and is hardly realizable in production.

In view of these and further problems, it has therefore been the object of the present invention to find a bonding method working at strongly reduced temperatures; the decrease of the bonding temperature can be of several hundred degrees Celsius. The significant decrease in bonding temperature is intended to achieve a breakthrough in the technology of manufacturing micro-structured components since this not only permits to lower equipment expense and, as a result thereof, the manufacturing costs, but also allows manufacturing components much larger than those presently possible in current prior art. As a result, the prerequisites for introducing micro-process technology in industrial practice are intended to be momentously improved.

It is a further object of the present invention that the bond joint meets highest demands placed on the mechanical strength of the component, even under thermal stress and pressure load.

It is a further of the present invention that the components reliably work for example at 350°C under high pressure of 100 bar for example.

It is a further object of the present invention that the corrosion resistance corresponds to the one of the base material utilized, *i*.*e*., the bonding process is intended not to result in grain coarsening or other deterioration of the material properties.

These objects are accomplished by the bonding method as set forth in claim 1. Preferred embodiments of the invention are recited in the subordinate claims.

The method of the invention serves to bond work pieces, more specifically micro-structured, metallic components.

It relies on the surprising observation that, under the conditions in accordance with the invention, monolithic bonding results can already be obtained at much lower temperatures. The experimental results of the invention produce clear evidence that the use of the semimetals that have been described to be unsuitable and problematic also in the specialized literature, namely boron, carbon and phosphorus, permits to overcome essential problems of current prior art methods. Advantages of electroplating or electroless production of the bonding layers in particular surprisingly come into effect. This concerns meeting the high demands placed on precise coating thicknesses and stoichiometry control, the purity of the layers, the adherence on the base layer. The method of the invention stands out not least because of the attractive method costs.

Since moreover greater tolerances with regards to surface finish (roughness) are surprisingly possible using the method of the invention, it can be utilized more reliably and readily in an industrial context.

The method substantially comprises the following method steps:
a. forming a bonding arrangement, which comprises the work pieces and wherein the work pieces are located such that they may be bonded, said arrangement further comprising a bonding layer interposed between the work pieces,
b. heating the bonding arrangement to a bonding temperature below the melting temperature of the bonding layer.

The bonding layer is deposited in accordance with the invention using a chemical or electrolytic method. The chemical or electrolytic method is meant to be a wet-chemical method (galvanotechnics) in which a layer is deposited from a chemical processing liquid, a solution, suspension or dispersion for example, onto the surfaces of the work pieces, using or not using electric current. Chemical methods refer to such methods that do not use electric current to produce the layer whereas electrolytic methods are characterized by the use of an electric current to deposit the layer. The chemical methods may further be divided into electroless (without external current source, autocatalytic) methods and into methods brought about by charge exchange reaction (cementation / immersion methods). In the first case, metal is deposited with the help of a reducing agent in the processing liquid. In this case, the liquid is metastable to decomposition. In the last case, metal is deposited from the liquid while the work piece material dissolves at the same time.

The bonding method of the invention is particularly suited for bonding work pieces made from nickel, nickel base alloys and/or steels, stainless steels above all. The method may for example serve to bond work pieces made of nickel superalloys, *i*.*e*., nickel base alloys with a nickel fraction of at least 28 wt.-%. Such type materials are mainly suited for manufacturing micro-structured components, *i*.*e*., components with fluid conducting structures, more specifically of micro-structured reactors, mixers and heat exchangers in chemistry. It is their thermal stability and their stability to corrosion that makes them suited for this purpose. Using the method of the invention, the work pieces are joined together by their bonding layer. The bonding layer serves to produce an intimate bond between the work piece surfaces. Using such bonding layers, a very strong bond joint can be particularly achieved if the constituent parts of the bonding layer diffuse into the bonding partners, the work pieces, and also if the constituent parts of the work pieces diffuse into the bonding layer.

An essential function of the bonding layer of the invention therefore is to make diffusion processes possible even at low temperatures or to accelerate them.

By placing the bonding layer between the work pieces and more specifically by forming the bonding layer on the surfaces of the work pieces (at bonding areas) using a chemical or electrolytic method, extremely level and smooth surfaces of the work pieces can be produced. This is extremely advantageous for obtaining a fast and strong bond of the joint between the work pieces. Even if the surfaces of the work pieces are not extremely level and smooth before the bonding layer is deposited, the bonding areas can be given the desired properties by suitably conducting the method. The method conditions needed for producing the desired properties are known. More particularly, using chemical and electrolytic methods, very level and smooth surfaces can even be produced if the uncoated work piece surfaces do not meet these requirements. Another advantage is that thin layers (of a few µm thick) in particular can be readily formed using these methods.

The bonding layer can be deposited onto the surface of only one bonding partner or onto the surface of the two bonding partners. At least if a bonding layer has been deposited onto this work piece, a bonding surface is formed on a respective work piece by the surface of a bonding layer. Otherwise, the bonding surface on a work piece is formed by the surface thereof.

As it never melts, *i*.*e*., the bonding temperature is always lower than the melting temperature, the bonding layer of the invention is not a solder layer in the conventional sense. So far, fluxes are unnecessary as they are intended to promote the wetting of the bonding partners with molten material. Furthermore, the bonding layer of the invention is already deposited onto the base material without an oxide interlayer, this also eliminating the second function of the flux, namely the one consisting in removing oxide layers from the base material.

This way of proceeding permits to gently process the work pieces since the bonding temperature can be chosen to be as low as possible. Additionally, more efficient and precise and also cheaper pressure tools, which cannot be utilized for the higher temperatures, may be used for the first time. A uniform pressure is particularly important for delicate work pieces such as component layers of micro-structured components in order to avoid distortion during bonding. This further makes it possible to introduce material instable to temperature, for example catalysts, to the work pieces before bonding without the risk of this material being adversely affected by the thermal stress.

Because of the outstanding importance of heterogeneously catalytic methods in the chemical industry, new important fields of application in the micro-process technology are thus opened up.

Since the layer does not liquefy during bonding, there is no risk that micro-structures on the work pieces become clogged by such type material.

The chemical or electrolytic method for producing the bonding layer is technically very easy to carry out and permits to reproducibly achieve the desired monolithic components with very high mechanical strength and corrosion resistance being maintained.

Due to the flexibility of the chemical and electrolytic methods for depositing the bonding layer with regards to the manner, composition and texture, customized solutions can be readily found for joining certain work pieces or base materials.

With the monolithically bonded components, no bonding seam is visible as there are no interfaces left any longer. As a result, the region in which the bonding layer was located before bonding hardly differs, if at all, from the base material once the method has been carried out so that it substantially has properties analogous to those of the base material. A monolithic structure has the required high mechanical fatigue strength even under thermal load as well as the desired resistance against corrosion. The high strength, more specifically under thermal load, is achieved in this case mainly by the fact that the expansion coefficients of the discrete, initially sandwiched materials equalize during diffusion so that there is practically no expansion coefficient gradient in the case of a seamless bond.

The bonding layers are preferably deposited onto the work pieces using an electroless method. This permits to achieve a particularly uniform thickness. In principle, using electrolytic deposition methods may also permit to achieve uniform thickness of the bonding layer. The standard deviation for thickness is even lower in the case of chemical methods, though. This allows for improved planarity of the bonding areas, which make more intimate contact and, as a result thereof, fast and ready bonding possible. Furthermore, the more uniform coating thickness allows depositing less bonding material onto the work pieces. This helps in producing monolithic textures because less material will have to diffuse into the work pieces. As a result, the bonding time is shortened and the risk of brittle phase formation reduced.

In principle, slightly thicker metal layers may also be produced so that, depending on the requirements, the respectively optimum conditions can be set. In most cases however, it will suffice to form a bonding layer having a thickness of 1 µm maximum in order to produce a strong joint. In certain cases however, it may be necessary to produce thicker bonding layers, for example if the surface on the work pieces is unusually uneven or rough, in order to then fill out the irregularities with the metal and to form a level surface.

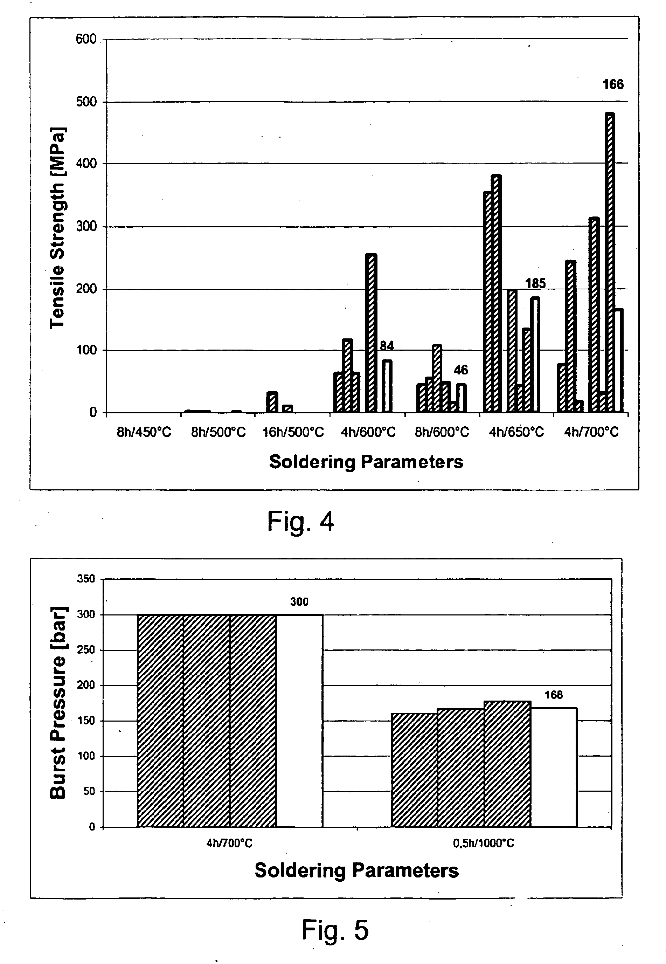

Depending on the bonding system, the preferred bonding temperatures of the invention are in the range of from 600°C to 800°C, as will be described in the FIGS. 4, 5, 6, 11, 12, 14, 15, 16 and 17.

The bonding temperature is also lower than the melting temperature Tₛ of the bonding layer. By nature, the bonding temperature depends on the diffusion coefficient of the respective component and, as a result thereof, on the melting temperature of the bonding material; it also depends on the melting temperature of the base material, though:
In the case of an amorphous alloy of 11.5 wt.-% phosphorus in nickel, the melting point Tₛ thereof is about 880°C (1153 K). The processing temperature range recommended in prior art (for example the catalogue of Fontagen Schweißtechnik) ranges between 850 and 890°C, *i*.*e*., between 0.97 Tₛ and 1.01 Tₛ.

Using the method of the invention, stable components can be manufactured at a temperature as low as 700°C. This corresponds to a bonding temperature decrease of almost 200°C as compared to prior art. At a bonding temperature of 700°C (973 K), this value consequently is 0.84 Tₛ. With this phosphorus content in the alloy, the melting point is lower than with any other phosphorus content. It is preferred to use a nickel/phosphorus alloy containing less than 11 wt.-% phosphorus and more specifically 8 ± 2.5 wt.-% phosphorus. With the phosphorus diffusing into the material of the work piece, the phosphorus content drops during bonding in the region of the bonding layer so that the melting temperature of the alloy rises there. This also allows achieving increased fatigue strength.

The bonding temperature decrease is even stronger using nickel-boron alloys. A bonding temperature of only 600°C (873 K) suffices to manufacture load-resisting components. The melting temperature of the bonding layer containing 4 wt.-% or 23 atom-% boron is approximately 1,140°C (about 1,410 K), *i*.*e*., the bonding temperature only is 0.62 Tₛ. The unusual strong decrease in temperature by more than 500°C is very surprising; a possible scientific explanation is that the atomic radius of boron is much smaller than that of phosphorus so that the diffusion should be significantly increased over phosphorus.

The behavior of very thin carbon layers is even more extreme. In this case also, this is due to the slight diffusion of C atoms in the steel or alloy matrix.

By selecting the lowest possible bonding temperature, the material on the work pieces, which may be temperature-sensitive, is saved. The micro-structured components may for example contain catalysts or other functional materials, for example as a layer on the walls of the micro-structures in the component layers. It is preferred that such type functional materials be deposited onto the walls of the micro-structures before bonding since subsequent uniform deposition thereof, onto the surfaces of the channel walls in particular, is problematic.

It should also be noted that the lower the bonding temperature, the slower the bonding process. In special cases, this temperature may therefore be decreased to as low as 550°C if long process times can be accepted.

As a result, the maximum bonding temperature preferably is about 0.9 Tₛ, more preferably about 0.85 Tₛ, further more preferably about 0.8 Tₛ, even more preferably about 0.75 Tₛ, still further preferably about 0.7 Tₛ and most preferably about 0.65 Tₛ.
For the purpose of indicating the bonding temperature, Tₛ has been given in [K].

The maximum thickness of the bonding layer preferably is about 5 µm, more preferably about 2 µm and most preferably about 1 µm. By selecting a small thickness, the formation of brittle phases using alloys of transition metals with an element (nonmetal/semimetal) such as boron, phosphorus or carbon as the bonding material is suppressed. With the very small coating thicknesses of the invention, these alloy components diffuse into the regions adjacent the bonding areas of the work pieces. Since the diffusion paths are short, this needs but little time so that an intimate bond of the work pieces with the bonding material is obtained very quickly. After that, if the bonding time is sufficiently long, the bonding material merges with the work piece material, either completely or at least for the most part. Since the bonding material is only available in quite small quantities due to the small coating thickness, it is only natural that only very small quantities of the constituent parts of the bonding material need to diffuse into the work pieces. Since, according to the phase diagram, boron, phosphorus and carbon dissolve to a small extent in iron, the formation of a brittle phase is prevented with these small quantities.

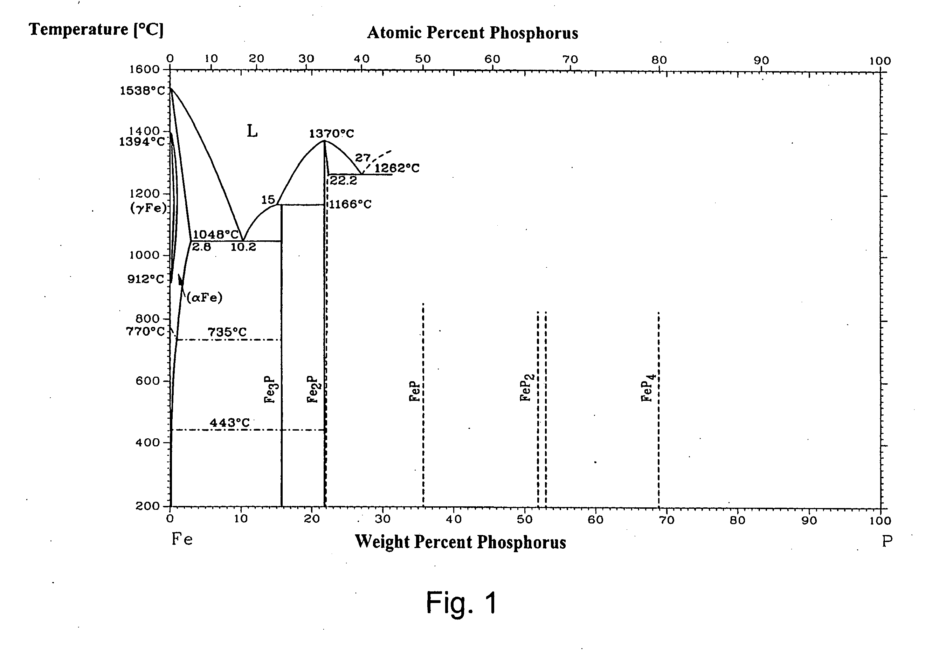

This can be seen in the phase diagram of the iron-phosphorus system shown in Fig. 1. It shows an existing α-phase on the left side of the diagram in the range of from about 500°C to almost the melting point. The α-phase has a solubility of up to 4.9 atom-% phosphorus in iron at 1,050°C. This behavior strongly promotes the diffusion of phosphorus in iron. Furthermore, the risk of brittle phase formation (e.g., Ni₃P) is extremely low because, on the one side, only small quantities of phosphorus are available in the bonding zone and because, on the other side, the solubility in the base material promotes diffusion of the phosphorus into the base material.

Constituents of the material from which the work pieces to be bonded are made, may also diffuse into the bond seam so that, on the whole, interdiffusion of the elements is taking place.

However, the thickness of the bonding layer should not fall below a minimum value since the surface finish of the bonding surfaces (planarity and roughness) to be met can only be achieved if the coating thickness is sufficient. Moreover, sufficient coating thickness must be provided to assure the bonding process. One exception however is the use of vapor-deposited carbon or boron layers the thickness of which is in the nanometer range.

The nonmetals and/or semimetals contained in the bonding layer, which are selected from the group comprising phosphorus, boron and carbon, yield a decreased melting point over pure metals. The elements mentioned can diffuse into the work piece material during the bonding process so that an intimate, and as a result thereof highly strong, bond is obtained. Phosphorus, carbon and above all boron are sufficiently soluble in iron and nickel. This considerably facilitates diffusion of these elements into work piece surfaces made from nickel or nickel base alloys. Furthermore, interdiffusion of the metallic elements of the work piece and of the material of the bonding layer also takes place.

The amount of nonmetal or semimetal element in the bonding layer, of phosphorus in particular, influences the reaction time of the bonding process, for the smaller the amount, *i*.*e*., the thinner the thickness of the bonding layer, the faster the bonding process ends. To form a mechanically strong bond between the work pieces, at least one transition metal is used for the material of the bonding layer, said transition metal being selected from the group comprising nickel, iron, cobalt, chromium and manganese. Accordingly, the material may for example consist of one of the transition metals mentioned in its pure form or of an alloy containing at least one of these transition metals. In the last case, the alloy is preferably a base alloy of one of these transition metals. This alloy may contain one of these transition metals and at least a further one of these transition metals and/or of these afore mentioned nonmetals and/or semimetals and/or at least any other element. The bonding layer may for example consist of a binary alloy consisting of at least one transition metal, selected from the group comprising nickel, iron, cobalt, chromium and manganese and of one nonmetal or semimetal, selected from the group comprising phosphorus, boron and carbon. The bonding layer may in particular consist of at least one alloy, selected from the group comprising nickel/phosphorus (NiPₓ), nickel/boron (NiBₓ) and iron/phosphorus (FePₓ) alloys.

As an alternative to the afore mentioned variants, the bonding layer can also consist of at least one dispersion layer at least one of them containing a transition metal comprising nickel, iron, cobalt, chromium and manganese and at least one nonmetal or semimetal dispersed therein, selected from the group comprising phosphorus, boron and carbon. During bonding, the nonmetal and/or semimetal as well as the other elements of the bonding layer diffuse so that the dispersion is abolished.

Any combination of the preceding alternatives is also possible. The bonding layer may for instance contain, in addition to one of the transition metals; selected from the group comprising nickel, iron, cobalt, chromium and manganese, another one of the transition metals mentioned and additionally one of the preceding nonmetals or semimetals. In this case, the bonding layer can more specifically consist of a ternary alloy consisting of two transition metals, selected from the group comprising nickel, iron, cobalt, chromium and manganese and of one nonmetal or semimetal, selected from the group comprising phosphorus, boron and carbon. The alloy can for example be a nickel base alloy with cobalt and phosphorus constituents.

In another variant, the bonding layer can also consist of a layer sequence consisting of at least one alloy layer and of one metal layer. In this case, at least one of the at least one alloy layer can contain at least one transition metal, selected from the group comprising nickel, iron, cobalt, chromium and manganese and one nonmetal or semimetal, selected from the group comprising phosphorus, boron and carbon. The metal layer can further consist of at least one transition metal, selected from the group comprising nickel, iron, cobalt, chromium and manganese. The bonding layer may for example consist of a layer sequence consisting of a nickel-phosphorus alloy layer and a chromium layer.

It is understood that other initial states can be envisaged for the bonding method in order to provide the metals needed for bonding and the nonmetals or semimetals used as the bonding aids. Therefore, it would also be possible to form the bonding layer from layer sequences consisting of three or more layers consisting of dissimilar substances.

In order to manufacture a monolithic component from the bonding partners, the bonding arrangement may be heated to the bonding temperature or, after a first bonding step at the bonding temperature, be further heated to another, lower temperature, until the bonding layer can no longer be made visible in cross section. In this case, the bonding partners are preferably bonded together at at least so high a temperature and during at least so long a bonding time that a seamless bond is obtained. In such a case, all the bond seams have completely disappeared by diffusion of the constituents of the bonding layer and the bonding partners. A very strong bond, which is insensitive to corrosion, is formed as a result thereof.

The bonding time for manufacturing the monolithic component depends in particular on the type of the material from which the work pieces are made and on the type of material from which the bonding layer is made, further on the bonding temperature and on the pressure by means of which the bonding partners are pressed together during bonding. Bonding time can be chosen within a wide range. Bonding time may for example be at least 4 hours and is particularly preferred to be at least 8 hours. The higher the bonding temperature, the shorter the bonding time may be.

Mechanical strength of the bond is further optimized in that the bonding arrangement is exposed to increased pressure during heating. This permits to still smooth out minute irregularities on the bonding surfaces. The compression pressure preferably is at least about 1 MPa and most preferably at least about 3 MPa. The upper pressure limit is about 20 MPa, preferably about 10 MPa, more preferably about 5 MPa.

When manufacturing micro-structured components from component layers in particular, the bonding parts are respectively joined together through a plurality of faying bonding areas. In this case above all, it has been found advantageous to place the bonding layer only on those locations in the bonding arrangement where the components are to be joined together through bonding areas. Accordingly, the bonding layer is only deposited selectively onto the bonding areas of the bonding partners and not onto other surfaces of the work pieces.

In order to prevent the work pieces and the bonding layer from oxidizing during bonding, the bonding arrangement is preferably heated under pure hydrogen or under vacuum (< 10⁻⁴ mbar).

The materials adapted for being bonded with the method of the invention are above all stainless steels and nickel alloys, for example alloys with the material no. 1.4310, 1.4404, 1.4571, 1.4958/1.4876 H, 1.4959, 2.4610.

The examples and Figures described herein after will explain the invention in detail. In the drawings:
- Fig. 1: shows the phase diagram Fe-P;
- Fig. 2: is a schematic side view of cylinder samples for examining the bond strength;
- Fig. 3: is a schematic three-dimensional illustration of an arrangement of components to be joined by a planar bond, said arrangement consisting of a covering metal sheet, a plurality of micro-structured channelled metal sheets and one bottom metal sheet;
- Fig. 4: is a bar chart representing the tensile strength of cylinder samples of Nicrofer^{®} (trade mark of ThyssenKrupp VDM, DE), bonded with 2 µm NiPₓ (from 600°C bonding temperature) or 4 or 8 µm NiPₓ as the bonding layer (below 600°C bonding temperature);
- Fig. 5: is a bar chart representing the burst pressure of micro-structured steel (1.4404) components, bonded with 4.5 µm NiPₓ as the bonding layer (11 wt.-% P; compression pressure: about 1 MPa);
- Fig. 6: is a bar chart representing the dependency of the tensile strength of cylinder samples (Nicrofer^{®} / 4 h / 700°C / about 20 MPa) on the thickness of the NiPₓ bonding layer;
- Fig. 7: is a scanning electron microscope image and EDX-line scan representing the content of iron, chromium, nickel and phosphorus in the bond region of a cylinder sample (Nicrofer^{®}), bonded with 2 µm NiPₓ as the bonding layer (4 h / 700°C, 10 MPa compression pressure);
- Fig. 8: is a scanning electron microscope image showing the bond joint of a Nicrofer^{®} cylinder (1 µm NiPₓ / 0.5 h / 1,000°C / about 10 MPa);
- Fig. 9: is a scanning electron microscope image showing a bond joint on a micro-structured component made of steel (1.4404), bonded with 3 µm NiPₓ as the bonding layer (0.5 h / 600°C / about 2 MPa);
- Fig. 10: shows scanning electron microscope images of bond joints of a micro-structured component made from steel (1.4404), bonded with 4,5 µm NiPₓ as the bonding layer (0.5 h /1,000°C / about 20 MPa);
- Fig. 11: is a bar chart representing the tensile strength of cylinder samples of Nicrofer^{®}, bonded with 1.5 µm NiBₓ as the bonding layer;
- Fig. 12: is a bar chart representing the burst pressure of components made from steel (1.4404), bonded with 1.5 µm NiBₓ as the bonding layer (compression pressure: about 2 MPa);
- Fig. 13: shows scanning electron microscope images of the bond joint of a micro-structured component (1.4404), bonded with NiBₓ (1.5 µm) as the bonding layer (0.5 h / 1,000°C / about 2 MPa) taken at different magnifications;
- Fig. 14: is a bar chart representing the tensile strength of cylinder samples of Nicrofer^{®}, bonded with FePₓ as the bonding layer at a compression pressure of 20 MPa;
- Fig. 15: is a bar chart representing the tensile strength of cylinder samples of steel (1.4404), bonded with a layer combination consisting of NiPₓ and chromium as the bonding layer (compression pressure: about 10 MPa);
- Fig. 16: is a bar chart for comparing the tensile strength of cylinder samples bonded with and without a NiPₓ interlayer (0.5 h / 1,000°C / about 10 MPa);
- Fig. 17: is a bar chart for comparing the tensile strength of cylinder samples bonded with and without a NiBₓ interlayer (4 h / 700°C / about 10 MPa).

### A. Experimental conditions:

### a. Base materials and sample designs:

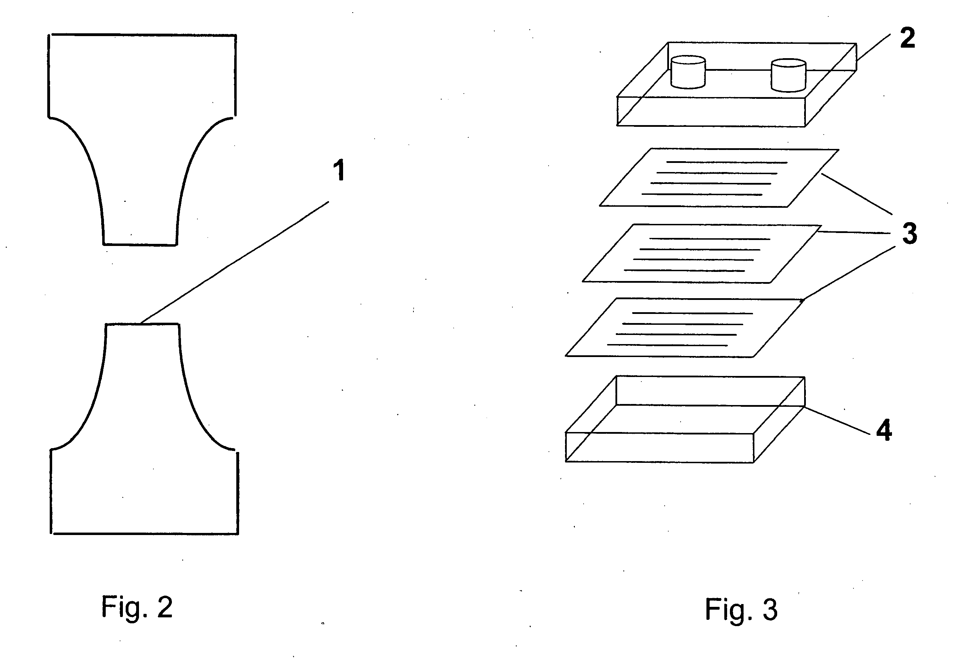

In principle, the bonding method of the invention allows bonding a great number of metals and metal alloys. By way of example, the bonding method was carried out with the following materials: stainless steel (material no. 1.4404) and Nicrofer^{®} 3220HT (material no. 1.4876). For screening the process parameters, cylinder-shaped samples with a to-be-soldered/brazed area of about 20 mm² were used (diameter of the circular bonding area: 5 mm). The shape of these samples is modelled on the shape of the small proportional sample according to DIN EN 10 002 part 1. A schematic side view of the samples is shown in Fig. 2. The bonding area is located on the samples in the position labelled with the reference numeral 1. To determine the tensile strength on these samples, a tensile testing machine (Zwick Z010) was utilized that could exert a maximum force of 10,000 N.

The applicability of the results determined from this arrangement and concerning the bond strength to components to be joined with a planar bond was then demonstrated by way of example on layered components. This arrangement is shown in Fig. 3. These components consisted of a plurality of component layers, namely a covering metal sheet 2 with two internal threads, a plurality of structured channel metal sheets 3 and one bottom metal sheet 4.

### b. Producing the bonding layers by metal deposition:

Various systems can be envisaged as the bonding layers. The alloys NiPₓ, NiBₓ and FePₓ as well as the layer system NiPₓ/Cr were examined by way of example.

NiPₓ layers with a coating thickness of 0.3-8 µm were deposited with an electroless metallization bath. The bath NiChem PF 500 (Atotech Deutschland) was used for this purpose (Ni content: 5.6 g/l, sodium hypophosphite as the reducing agent, T: 82-90°C, pH: 4.6-4.9, phosphorus content of the deposited layer: 7-14 wt.-%).

NiBₓ layers with a coating thickness of 1-2 µm were also deposited with an electroless metallization bath. The bath consisted of deionized water, NaOH, CH₃CH(OH)CO₂H, NiSO₄, dimethylamino borane, Na₂SO₄. The deposition temperature was 48°C and the pH of the bath 5.3-5.6.

FePₓ was electrolytically deposited from an electrolyte containing Fe²⁺ ions. The bath had the following composition: deionized water, FeSO₄, FeCl₂, H₃PO₃. The deposition temperature was 50-70°C, the cathodic current density 1-25 A/dm² and the pH 4-6.

To coat the samples with NiPₓ, they were pre-treated using the method indicated in Table 1. The baths mentioned therein, Uniclean^{®} (trade mark of Atotech Deutschland; hot degreasing) and Nonacid^{®} (trade mark of Atotech Deutschland; electrolytic degreasing). The nickel strike bath is a commercially available electrolytic nickel bath (Watts type): The sample was freed from grease and oil using Uniclean^{®}. Furthermore, very resistant greases and oils were removed with Nonacid^{®}. In the last treatment step, a highly active nickel layer was deposited onto the metal sample using nickel strike in order to prepare the surface for subsequent plating. Without nickel pre-plating, neither nickel nor NiPₓ can be deposited onto the passive material.

This also applies in like fashion for plating with NiBₓ and FePₓ. For subsequent electrolytic plating with chromium, the pre-treatment indicated in Table 2 was chosen. Uniclean^{®} 279 degreaser, which was used in this case in the second step, was needed, just like Nonacid^{®} degreaser as well, to remove very resistant and strongly adhering greases and oils. Pickling in 10 % by volume sulphuric acid aided in removing alkaline residues of the Uniclean^{®} pre-treatments so that the surface treatment was completed before electrolytic metallization.

The thickness of the respective layers was determined by means of XRF as well as by producing a cross section and by visual examination under a light-optical microscope or a scanning electron microscope.

### c. Bonding process:

Provided with the respective bonding layers, the samples were bonded in a special soldering/brazing furnace at a temperature ranging from 500°C to 1,000°C under vacuum (10⁻⁴ mbar). After the samples had been heated to the bonding temperature, they were kept on this bonding temperature during a holding time of from 30 minutes to 16 hours. Graphite holders making it possible to apply the necessary compression pressure were used to secure the samples.

### d. Quality of the bond joint:

To test the quality of the bond joints, the mechanical stability of the cylinder samples was determined. For this purpose, the bonded samples were clamped into a tensile testing machine and the maximum force that can be applied before the bond joint breaks was determined.

At first, the leak tightness of the bonded components was examined using air pressure (3 bar). Next, the maximum hydrostatic burst pressure the bonded components withstood was determined on a burst bench.

Cross sections of selected samples were made and the micro-structure as well as the elementary composition of the bonding zone were characterized by means of scanning electron microscopy or EDX analysis.

### B. Examples in accordance with the invention:

Results of the tensile strength on bonded cylinder samples made from Nicrofer^{®} are given in Fig. 4. The corresponding values for samples bonded with NiPₓ are indicated there. The coating thickness of NiPₓ on the samples bonded at a bonding temperature of from 600°C was 2 µm. Below this temperature, it was 4 or 8 µm. From these results, it can be seen that sufficient tensile strength values were obtained at a bonding temperature of from about 600°C.

In Fig. 5, maximum values for the burst pressure of stainless steel components (steel (1.4404)) bonded with NiPₓ with a thickness of 4.5 µm and a phosphorus content of 11 wt.-% as the bonding layer are given under various bonding conditions (a: 4 h / 700°C, b: 0.5 h / 1,000°C). The mean values of the burst pressure are 300 bar (4 h / 700°C) or 168 bar (0.5 h / 1,000°C).

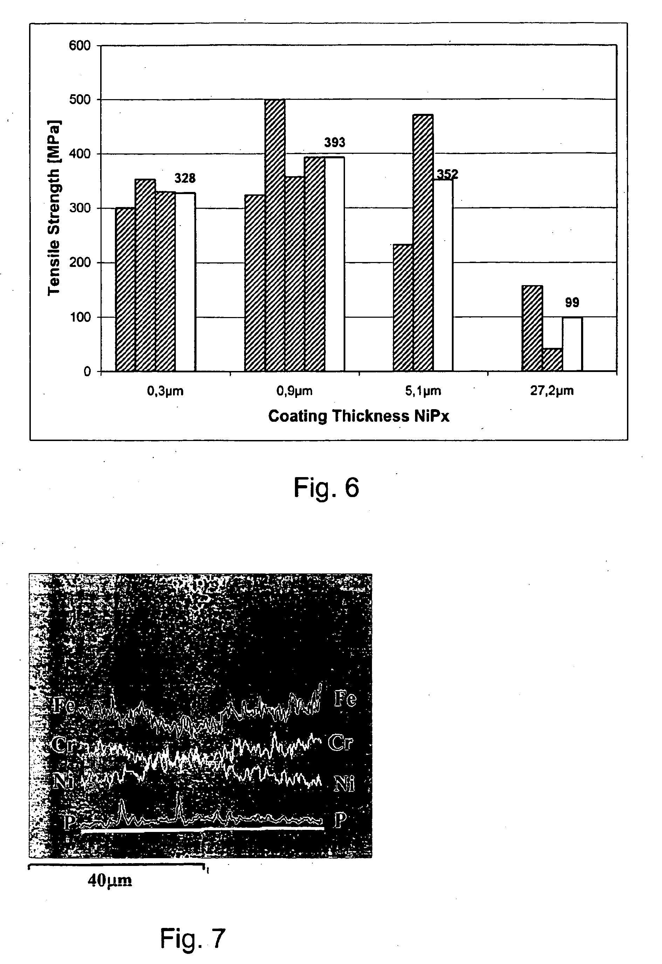

Fig. 6 shows the dependency of the tensile strength of cylinder samples (Nicrofer^{®}) on the thickness of the NiPₓ bonding layer. The represented bar chart shows the values for samples that were bonded for 4 h at 700°C at a compression pressure of about 20 MPa each. It can be seen that the tensile strength drops significantly with increasing coating thickness. Accordingly, with this method, the use of thinner layers is advantageous for the mechanical strength of the bond joint.

To demonstrate the formation of a monolithic bond, *i*.*e*., of a seamless bond, on steel samples having NiPₓ as the bonding layers, the area of the bond joint (4 h / 700°C /about 10 MPa) was scanned by means of EDX to detect the presence of iron, chromium, nickel and phosphorus. The corresponding profiles are given in Fig. 7. Although in the bond region, a small concentration gradient for iron into the joint is created (upper curve), this illustration still shows that not only phosphorus diffused into the steel samples located to the left and to the right side of the joint, but that iron also diffused from the samples into the joint region.

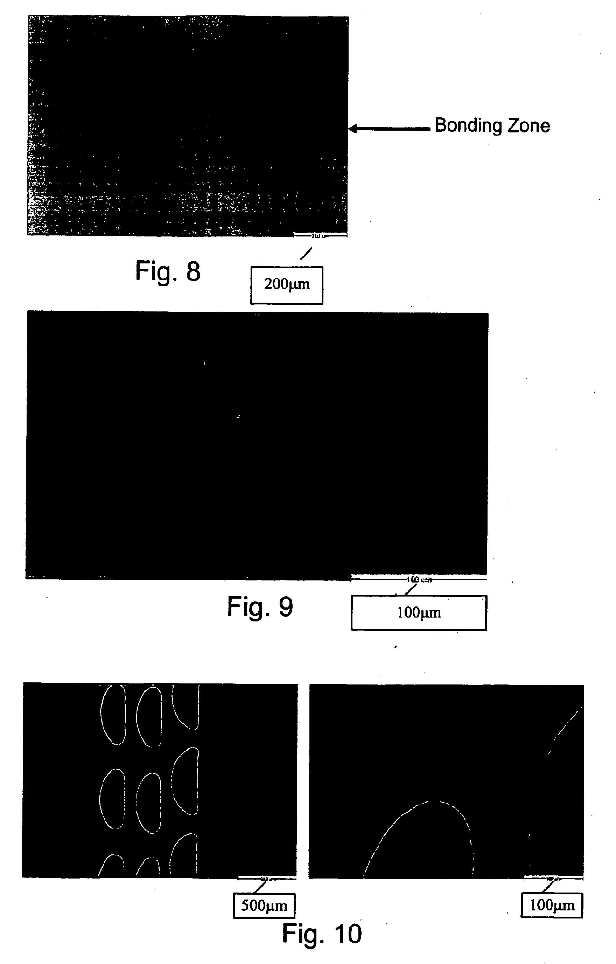

In Fig. 8, another scanning electron microscope image of the bonding zone of a Nicrofer^{®} cylinder that was bonded with 1 µm NiPₓ (0.5 h / 1,000°C / about 10 MPa) is illustrated. No bonding zone is visible, this speaking for a monolithic texture.

Fig. 9 shows the image of a cross section, taken with a scanning electron microscope. The bond joint shown was obtained from a component having a NiPₓ layer of 3 µm thick at a bonding temperature of 600°C and a holding time of 0.5 h. According thereto, the initially provided NiPₓ bonding layer has almost completely disappeared: the phosphorus and/or nickel atoms have diffused into the material of the sample. As the bonding temperature increases, the holding time can be shortened. Moreover, increased mechanical stability of the bond is achieved.

The scanning electron microscope images shown in Fig. 10 were obtained after bonding from components made of steel (1.4404) with channels. The component was provided with a NiPₓ layer of 4.5 µm thick (11 wt.-% phosphorus) and had been bonded for 0.5 h at 1,000°C and with a compression pressure of about 2 MPa.

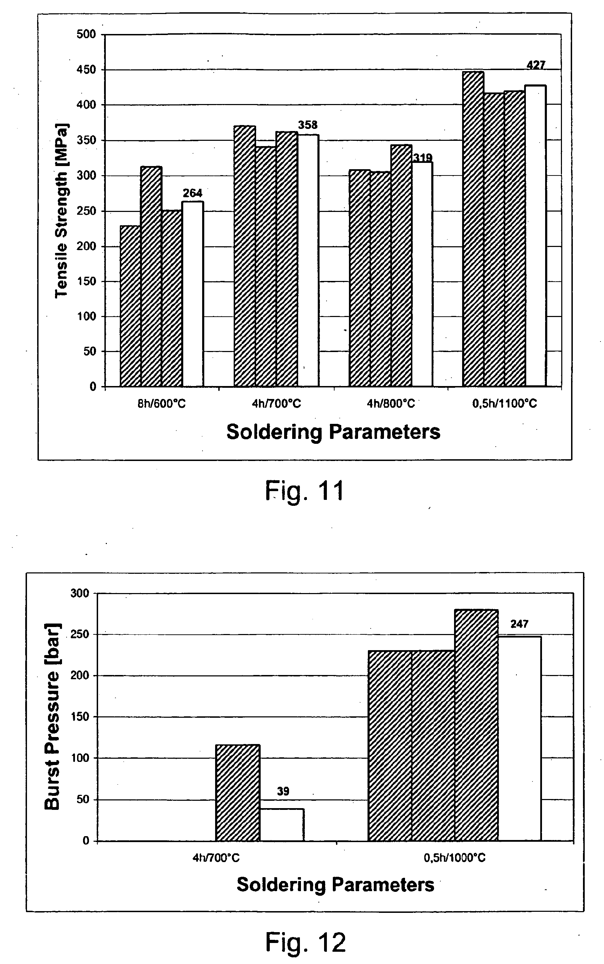

Using a NiBₓ layer of 1.5 µm thick as the bonding layer, steel cylinders having the shape shown in Fig. 2 were bonded together. The results are given in a bar chart in Fig. 11. This Fig. shows the tensile strength determined in the tensile testing machine at a bonding temperature of 600°C and at a holding time of 8 h and, respectively, at a bonding temperature of 800°C and a holding time of 4 hours, each for several samples. The respective mean values were determined for 264 MPa and 358 MPa, respectively. The experiments show that reliable bonds can already be obtained at a temperature as low as about 600°C.

Furthermore, components coated with NiBₓ were bonded under various conditions and the respective burst pressure determined. The components were made of steel (1.4404) and were coated with a NiBₓ layer of 1.5 µm thick. For bonding, the arrangement was bonded for 4 h at 700°C and for 0.5 h at 1,000°C respectively; a compression pressure of about 2 MPa was applied. The results are given in the bar chart in Fig. 12. The mean values of the burst pressure were 39 bar (700°C) and 247 bar (1,000°C), respectively.

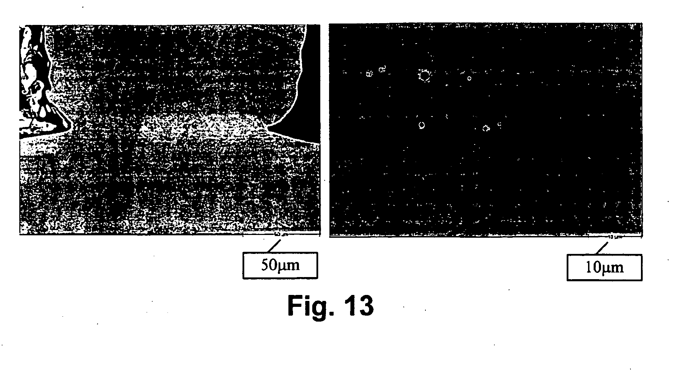

Examinations with the scanning electron microscope and EDX analysis of samples bonded in this way showed that interdiffusion in the region of the solder seam had already proceeded so far that the solder layer could hardly be distinguished from the base material. This can be best seen in Fig. 13 for example: there, a bond joint is shown at different magnifications. The lack of bond seam speaks for a monolithic texture.

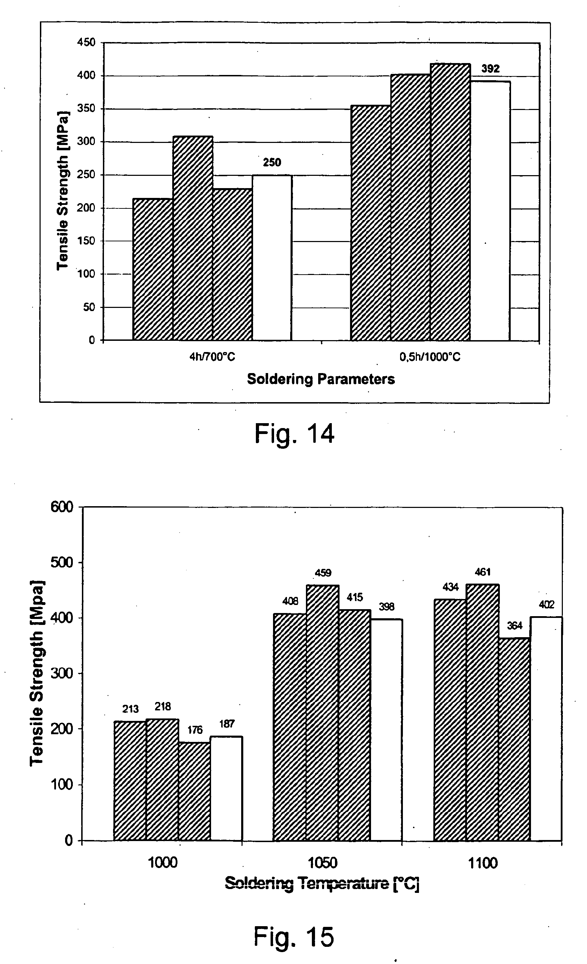

Other results obtained with FePₓ as the bonding layer are represented in Fig. 14. In this case, Nicrofer^{®} cylinders were bonded at a bonding temperature of 700°C and with a compression pressure during bonding of about 20 MPa. The bonding conditions were: a. 4 h / 700°C and b. 0.5 h / 1,000°C. The mean values for the tensile strength were 250 MPa (4 h / 700°C) and 392 MPa (0.5 h / 1,000°C), respectively. As a result, it can be shown that Nicrofer^{®} can already be bonded at a temperature as low as 700°C. Up to 3 bar, the components provided with channels did not show any leak. The mean burst pressure was 120 bar.

In other tests, layer combinations of NiPₓ and chromium were used as the bonding layer. The chromium layer was deposited electrolytically (HEEF^{®} 25 (Atotech Deutschland): deionized water, CrO₃, H₂SO₄; T = 55-65°C; pH<1; 30-70 A/dm²). Cylinder probes made from steel (1.4404) and coated with this layer combination were bonded at a bonding temperature of from 1,000°C to 1,100°C. The holding time was 0.5 h in each test. The tensile strength values obtained are given in Fig. 15. A sufficient number of reliable bonds were obtained. Scanning electron microscope images obtained from these bonds showed no bond seam in cross section.

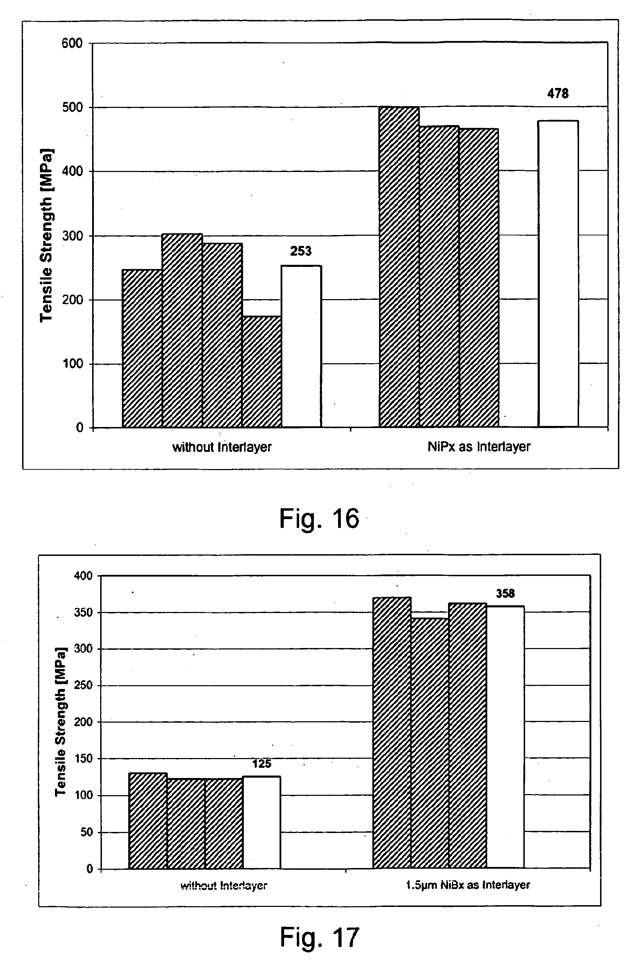

Fig. 16 opposes the tensile strength of cylinder samples (bonded with 2 µm NiPₓ / 0.5 h / 1,000°C / ca. 10 MPa) to probes bonded in an analogous manner without a NiPₓ layer. The values obtained in the bar chart produce clear evidence that the presence of an interlayer makes it possible to obtain a significantly more adherent joint.

In an analogous manner, Fig. 17 shows that, at a bonding temperature of 700°C (1.5 µm NiBₓ / 4 h / about 10 MPa), significantly higher strength is obtained with bonding layer than without.

It is understood that the examples and embodiments described herein are for illustrative purpose only and that various modifications and changes to the fall within the scope of the appended claims.

**Table 1: Method for pre-treating prior to NiPₓ-, NiBₓ and FePₓ-plating**

| Bath | pH | Temperature [°C] | Current density | Treatment time |
|---|---|---|---|---|
| | | | [A/dm²] | [minutes] |
| Uniclean^{®} 155 6 % | ≈ 14 | 60 | ./. | 10 |
| Nonacid^{®} 701 | ≈ 13 | 55 | 7 - 15 | 2 |
| Nickel strike | ≈ 1 | 40 | 1 | 1 |

**Table 2: Method for pre-treating prior to chromium plating**

| Bath | pH | Temperature [°C] | Current density | Treatment time |
|---|---|---|---|---|
| | | | [A/dm²] | [minutes] |
| Uniclean^{®} 155 6 % | ≈ 14 | 60 | ./. | 10 |
| Uniclean^{®} 279 15 % | ≈ 13 | 55 | 5 - 10 | 1 |
| Pickling (10 % H₂SO₄) | ≈ 1 | room temperature | ./. | 1 |

## Claims

1. A method of bonding micro-structured component layers that are suited for manufacturing micro-structured components, said micro-structured component layers being made of at least one material consisting of nickel, nickel alloys and steels, comprising the following method steps:
forming an arrangement comprising the micro-structured component layers in a method step a), said arrangement being suitable for bonding same and further comprising a metallic bonding layer, said bonding layer containing at least one element, selected from the group comprising phosphorus, boron and carbon, being, deposited to respective bonding areas of the micro-structured component layers by using a chemical or electrolytic method and being interposed between the micro-structured component layers,
**characterized in that** the bonding arrangement is heated to a bonding temperature below the melting temperature of the bonding layer in a method step b).

2. The method as set forth in claim 1, **characterized in that** the chemical method is an electroless deposition method.

3. The method as set forth in any one of the preceding claims, **characterized in that** the bonding temperature is at most 800°C.

4. The method as set forth In any one of the preceding claims, **characterized in that** the bonding temperature is at least 550°C.

5. The method as set forth in any one of the preceding claims, **characterized in that** the bonding layer has a maximum thickness of 5 µm.

6. The method as set forth in any one of the preceding claims, **characterized in that** the bonding layer has a maximum thickness of 2 µm.

7. The method as set forth in any one of the preceding claims, **characterized in that** the bonding layer has a maximum thickness of 1 µm.

8. The method as set forth in any one of the preceding claims, **characterized in that** the bonding layer contains at least one transition metal, selected from the group comprising nickel, iron, cobalt, chromium and manganese.

9. The method as set forth in any one of the preceding claims, **characterized in that** the bonding layer consists of a binary alloy, consisting of at least one transition metal, selected from the group comprising nickel, iron, cobalt, chromium and manganese, and of one nonmetal or semimetal, selected from the group comprising phosphorus, boron and carbon.

10. The method as set forth in any one of the preceding claims, **characterized in that** the bonding layer consists of at least one alloy, selected from the group comprising nickel/phosphorus, nickel/boron and iron/phosphorus alloys.

11. The method as set forth in any one of claims 1 - 9, **characterized in that** the bonding layer consists of a dispersion layer containing at least one transition metal, selected from the group comprising nickel, iron, cobalt, chromium and manganese, and at least one nonmetal or semimetal dispersed therein, selected from the group comprising phosphorus, boron and carbon.

12. The method as set forth in any one of the preceding claims, **characterized in that** the bonding layer consists of a ternary alloy consisting of two transition metals, selected from the group comprising nickel, iron, cobalt, chromium and manganese, and of one nonmetal or semimetal, selected from the group comprising phosphorus, boron and carbon.

13. The method as set forth in any one of the preceding claims, **characterized in that** the bonding layer consists of a layer sequence consisting of at least one alloy layer at least one of said at least one alloy layer containing at least one transition metal, selected from the group comprising nickel, iron, cobalt, chromium and manganese, and one nonmetal or semimetal, selected from the group comprising phosphorus, boron and carbon, and of one metal layer containing at least one transition metal, selected from the group comprising nickel, iron, cobalt, chromium and manganese.

14. The method as set forth in claim 13, **characterized in that** the bonding layer consists of a layer sequence of a nickel/phosphorus alloy layer and a chromium layer.

15. The method as set forth in any one of the preceding claims, **characterized in that** the bonding arrangement is heated until the bonding layer can no longer be made visible in cross section.

16. The method as set forth in any one of the preceding claims, **characterized in that** the bonding arrangement is exposed to a compression pressure during heating.

17. The method as set forth in any one of the preceding claims, **characterized in that** the bonding layer is only placed on those locations in the bonding arrangement where the components are to be joined together through bonding areas.

18. The method as set forth in any one of the preceding claims, **characterized in that** the micro-structured component layers are components of a micro-reactor, a micro-heat exchanger or a micro-mixer.

19. The method as set forth in any one of the preceding claims, **characterized in that** the micro-structured component layers are bonded together at so high a temperature and during so long a bonding time that a seamless bond is obtained.

## Patentansprüche

1. Verfahren zum Fügen von mikrostrukturierten Bauteillagen, die zur Herstellung von mikrostrukturierten Bauteilen geeignet sind, wobei die mikrostrukturierten Bauteillagen aus mindestens einem Material, bestehend aus Nickel, Nickel-Legierungen und Stählen, hergestellt sind, umfassend die folgenden Verfahrensschritte:
Bilden einer Anordnung, umfassend die mikrostrukturierten Bauteillagen in einem Verfahrensschritt a), wobei die Anordnung zum Fügen der Bauteillagen geeignet ist, und weiterhin umfassend eine metallische Fügeschicht, wobei die Fügeschicht mindestens ein Element enthält, das ausgewählt ist aus der Gruppe, umfassend Phosphor, Bor und Kohlenstoff, und die auf die entsprechenden Fügeflächen der mikrostrukturierten Bauteillagen abgeschieden wird, indem ein chemisches oder elektrolytisches Verfahren angewendet wird, und die zwischen die mikrostrukturierten Bauteillagen eingefügt ist,
**dadurch gekennzeichnet, dass** die Fügeanordnung in einem Verfahrensschritt b) auf eine Fügetemperatur unter der Schmelztemperatur der Fügeschicht erwärmt wird.

2. Verfahren nach Anspruch 1, **dadurch gekennzeichnet, dass** das chemische Verfahren ein stromloses Abscheideverfahren ist.

3. Verfahren nach einem der vorstehenden Ansprüche, **dadurch gekennzeichnet, dass** die Fügetemperatur höchstens 800°C beträgt.

4. Verfahren nach einem der vorstehenden Ansprüche, **dadurch gekennzeichnet, dass** die Fügetemperatur mindestens 550°C beträgt.

5. Verfahren nach einem der vorstehenden Ansprüche, **dadurch gekennzeichnet, dass** die Fügeschicht eine maximale Dicke von 5 µm hat.

6. Verfahren nach einem der vorstehenden Ansprüche, **dadurch gekennzeichnet, dass** die Fügeschicht eine maximale Dicke von 2 µm hat.

7. Verfahren nach einem der vorstehenden Ansprüche, **dadurch gekennzeichnet, dass** die Fügeschicht eine maximale Dicke von 1 µm hat.

8. Verfahren nach einem der vorstehenden Ansprüche, **dadurch gekennzeichnet, dass** die Fügeschicht mindestens ein Übergangsmetall enthält, ausgewählt aus der Gruppe, umfassend Nickel, Eisen, Kobalt, Chrom und Mangan.

9. Verfahren nach einem der vorstehenden Ansprüche, **dadurch gekennzeichnet, dass** die Fügeschicht aus einer binären Legierung, bestehend aus mindestens einem Übergangsmetall, ausgewählt aus der Gruppe, umfassend Nickel, Eisen, Kobalt, Chrom und Mangan, und einem Nichtmetall oder Halbmetall, ausgewählt aus der Gruppe, umfassend Phosphor, Bor und Kohlenstoff, besteht.

10. Verfahren nach einem der vorstehenden Ansprüche, **dadurch gekennzeichnet, dass** die Fügeschicht aus mindestens einer Legierung, ausgewählt aus der Gruppe, umfassend Nickel/Phosphor-, Nickel/Bor- und Eisen/Phosphor-Legierungen, besteht.

11. Verfahren nach einem der Ansprüche 1 - 9, **dadurch gekennzeichnet, dass** die Fügeschicht aus einer Dispersionsschicht, enthaltend mindestens ein Übergangsmetall, ausgewählt aus der Gruppe, umfassend Nickel, Eisen, Kobalt, Chrom und Mangan, und mindestens ein darin dispergiertes Nichtmetall oder Halbmetall, ausgewählt aus der Gruppe, umfassend Phosphor, Bor und Kohlenstoff, besteht.

12. Verfahren nach einem der vorstehenden Ansprüche, **dadurch gekennzeichnet, dass** die Fügeschicht aus einer ternären Legierung, bestehend aus zwei Übergangsmetallen, ausgewählt aus der Gruppe, umfassend Nickel, Eisen, Kobalt, Chrom und Mangan, und einem Nichtmetall oder Halbmetall, ausgewählt aus der Gruppe, umfassend Phosphor, Bor und Kohlenstoff, besteht.

13. Verfahren nach einem der vorstehenden Ansprüche, **dadurch gekennzeichnet, dass** die Fügeschicht aus einer Schichtenfolge, bestehend aus mindestens einer Legierungsschicht, von denen jeweils mindestens eine mindestens ein Übergangsmetall, ausgewählt aus der Gruppe, umfassend Nickel, Eisen, Kobalt, Chrom und Mangan, und ein Nichtmetall oder Halbmetall, ausgewählt aus der Gruppe, umfassend Phosphor, Bor und Kohlenstoff, enthält, sowie einer Metallschicht, enthaltend mindestens ein Übergangsmetall, ausgewählt aus der Gruppe, umfassend Nickel, Eisen, Kobalt, Chrom und Mangan, besteht.

14. Verfahren nach Anspruch 13, **dadurch gekennzeichnet, dass** die Fügeschicht aus einer Schichtenfolge aus einer Nickel/Phosphor-Legierungsschicht und einer Chromschicht besteht.

15. Verfahren nach einem der vorstehenden Ansprüche, **dadurch gekennzeichnet, dass** die Fügeanordnung so lange erwärmt wird, bis die Fügeschicht in einem Querschliff nicht mehr sichtbar gemacht werden kann.

16. Verfahren nach einem der vorstehenden Ansprüche, **dadurch gekennzeichnet, dass** die Fügeanordnung während der Erwärmung einem Pressdruck ausgesetzt wird.

17. Verfahren nach einem der vorstehenden Ansprüche, **dadurch gekennzeichnet, dass** die Fügeschicht lediglich an den Stellen in der Fügeanordnung platziert wird, an denen die Bauteile über Fügeflächen miteinander verbunden werden sollen.

18. Verfahren nach einem der vorstehenden Ansprüche, **dadurch gekennzeichnet, dass** die mikrostrukturierten Bauteillagen Bestandteile eines Mikroreaktors, Mikrowärmetauschers oder Mikromischers sind.

19. Verfahren nach einem der vorstehenden Ansprüche, **dadurch gekennzeichnet, dass** die mikrostrukturierten Bauteillagen bei einer so hohen Temperatur und während einer so langen Fügedauer miteinander gefügt werden, dass sich ein nahtloser Fügeverbund ergibt.

## Revendications

1. Procédé de liaison de couches de composants microstructurés qui sont adaptées à la fabrication de composants microstructurés, lesdites couches de composant microstructuré étant fabriquées à partir d'au moins un matériau constitué de nickel, d'alliages de nickel et d'aciers, comprenant les étapes de procédé suivantes :
formation d'un agencement comprenant les couches de composants microstructurés dans une étape de procédé a), ledit agencement étant adapté pour assurer la liaison des couches de composants microstructurés et comprenant en outre une couche de liaison métallique, ladite couche de liaison contenant au moins un élément, choisi dans le groupe comprenant phosphore, bore et carbone, étant déposée sur les zones de liaison respectives des couches de composants microstructurés en utilisant un procédé chimique ou électrolytique et étant intercalée entre les couches de composants microstructurés,
**caractérisé en ce que** l'agencement de liaison est chauffé à une température de liaison en dessous de la température de fusion de la couche de liaison dans une étape de procédé b).

2. Procédé selon la revendication 1, **caractérisé en ce que** le procédé chimique est un procédé de dépôt sans électrode.

3. Procédé selon l'une quelconque des revendications précédentes, **caractérisé en ce que** la température de liaison est au plus de 800°C.

4. Procédé selon l'une quelconque des revendications précédentes, **caractérisé en ce que** la température de liaison est au moins de 550°C.

5. Procédé selon l'une quelconque des revendications précédentes, **caractérisé en ce que** la couche de liaison a une épaisseur maximale de 5 µm.

6. Procédé selon l'une quelconque des revendications précédentes, **caractérisé en ce que** la couche de liaison a une épaisseur maximale de 2 µm.

7. Procédé selon l'une quelconque des revendications précédentes, **caractérisé en ce que** la couche de liaison a une épaisseur maximale de 1 µm.

8. Procédé selon l'une quelconque des revendications précédentes, **caractérisé en ce que** la couche de liaison contient au moins un métal de transition, choisi dans le groupe comprenant nickel, fer, cobalt, chrome et manganèse.

9. Procédé selon l'une quelconque des revendications précédentes, **caractérisé en ce que** la couche de liaison est constituée d'un alliage binaire, constitué d'au moins un métal de transition, choisi dans le groupe comprenant nickel, fer, cobalt, chrome et manganèse et d'un non-métal ou semi-métal, choisi dans le groupe comprenant phosphore, bore et carbone.

10. Procédé selon l'une quelconque des revendications précédentes, **caractérisé en ce que** la couche de liaison est constituée d'un alliage, choisi dans le groupe comprenant des alliages de nickel/phosphore, nickel/bore et fer/phosphore.

11. Procédé selon l'une quelconque des revendications 1 à 9, **caractérisé en ce que** la couche de liaison est constituée d'une couche de dispersion contenant au moins un métal de transition, choisi dans le groupe comprenant nickel, fer, cobalt, chrome et manganèse et au moins un non-métal ou un semi-métal dispersé à l'intérieur de celle-ci, choisi dans le groupe comprenant phosphore, bore et carbone.

12. Procédé selon l'une quelconque des revendications précédentes, **caractérisé en ce que** la couche de liaison est constituée d'un alliage ternaire constitué de deux métaux de transition, choisis dans le groupe comprenant nickel, fer, cobalt, chrome et manganèse et d'un non-métal ou semi-métal, choisi dans le groupe comprenant phosphore, bore et carbone.

13. Procédé selon l'une quelconque des revendications précédentes, **caractérisé en ce que** la couche de liaison est constituée d'une séquence de couches constituée d'au moins une couche d'alliage, au moins l'une de ladite au moins une couche d'alliage contenant au moins un métal de transition, choisi dans le groupe comprenant nickel, fer, cobalt, chrome et manganèse et un non-métal ou semi-métal, choisi dans le groupe comprenant phosphore, bore et carbone et d'une couche métallique contenant au moins un métal de transition, choisi dans le groupe comprenant nickel, fer, cobalt, chrome et manganèse.

14. Procédé selon la revendication 13, **caractérisé en ce que** la couche de liaison est constituée d'une séquence de couches d'une couche d'alliage de nickel/phosphore et d'une couche de chrome.

15. Procédé selon l'une quelconque des revendications précédentes, **caractérisé en ce que** l'agencement de liaison est chauffé jusqu'à ce que la couche de liaison ne puisse plus être rendue visible en coupe transversale.

16. Procédé selon l'une quelconque des revendications précédentes, **caractérisé en ce que** l'agencement de liaison est exposé à une pression de compression au cours du chauffage.

17. Procédé selon l'une quelconque des revendications précédentes, **caractérisé en ce que** la couche de liaison n'est placée qu'à ces emplacements de l'agencement de liaison où les composants doivent être assemblés grâce à des zones de liaison.

18. Procédé selon l'une quelconque des revendications précédentes, **caractérisé en ce que** les couches de composants microstructurés sont les composants d'un micro-réacteur, d'un micro-échangeur thermique ou d'un micro-mélangeur.

19. Procédé selon l'une quelconque des revendications précédentes, **caractérisé en ce que** les couches de composants microstructurés sont jointes ensembles à une température si élevée et pendant si longtemps qu'une liaison sans couture est obtenue.
